# EUROPEAN PATENT APPLICATION

(11) **EP 4 344 272 A1**
(43) Date of publication of application: **27.03.2024**
(21) Application number: 22804407.9
(22) Date of filing: 29.03.2022
(51) Int. Cl.: H04W 8/24, H04W 16/28, H04W 88/02

(54) **TERMINAL, WIRELESS COMMUNICATION METHOD, AND BASE STATION**

(30) Priority: 19.05.2021 JP 2021084896
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/015536
(87) International publication number: WO 2022/244490

(57) **Abstract**

A terminal according to one aspect of the present disclosure includes: a receiving section that receives first radio resource control (RRC) information indicating a plurality of first transmission configuration indication (TCI) states applicable to both downlink and uplink, and second RRC information indicating a plurality of second TCI states applicable to one of downlink and uplink, receives a medium access control (MAC) control element (CE) indicating activation of at least one of one or more first TCI states of the plurality of first TCI states and one or more second TCI states of the plurality of second TCI states; and a control section that controls activation of the one or more first TCI states and the one or more second TCI states on a basis of at least one of the first RRC information and the second RRC information, and the MAC CE. According to one aspect of the present disclosure, TCI state indication can be appropriately performed.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low delay, and the like (Non Patent Literature 1). In addition, for the purpose of further increasing capacity and advancement of LTE (third generation partnership project (3GPP) release (Rel.) 8 and 9), the specifications of LTE-Advanced (3GPP Rel. 10 to 14) have been drafted.

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

In a future radio communication system (for example, NR), it has been studied that a user terminal (terminal, user equipment (UE)) controls transmission/reception processing on the basis of information regarding quasi-co-location (QCL) (QCL assumption/transmission configuration indication (TCI) state/spatial relation).

Applying a configured/activated/indicated TCI state to multiple types of signals (channels/RSs) has been studied. However, there are cases where a method for indicating the TCI state is not clear. When a method for indicating the TCI state is not clear, a decrease in communication quality, a decrease in throughput, or the like may be caused.

Therefore, an object of the present disclosure is to provide a terminal, a radio communication method, and a base station for appropriately performing TCI state indication.

### Solution to Problem

A terminal according to one aspect of the present disclosure includes: a receiving section that receives first radio resource control (RRC) information indicating a plurality of first transmission configuration indication (TCI) states applicable to both downlink and uplink, and second RRC information indicating a plurality of second TCI states applicable to one of downlink and uplink, receives a medium access control (MAC) control element (CE) indicating activation of at least one of one or more first TCI states of the plurality of first TCI states and one or more second TCI states of the plurality of second TCI states; and a control section that controls activation of the one or more first TCI states and the one or more second TCI states on a basis of at least one of the first RRC information and the second RRC information, and the MAC CE.

### Advantageous Effects of Invention

According to one aspect of the present disclosure, TCI state indication can be appropriately performed.

### Brief Description of Drawings

[FIG. 1] Fig. 1 is a diagram illustrating an example of simultaneous beam update across a plurality of CCs.
[FIG. 2] Figs. 2A and 2B are diagrams illustrating an example of a common beam.
[FIG. 3] Fig. 3 is a diagram illustrating an example of MAC CE defined in Rel. 16.
[FIG. 4] Fig. 4 is a diagram illustrating another example of MAC CE defined in Rel. 16.
[FIG. 5] Fig. 5 is a diagram illustrating another example of MAC CE defined in Rel. 16.
[FIG. 6] Fig. 6 is a diagram illustrating an example of switching by MAC CE according to a first embodiment.
[FIG. 7] Fig. 7 is a diagram illustrating an example of configuration of a TCI state by higher layer signaling according to a second embodiment.
[FIG. 8] Fig. 8 is a diagram illustrating an example of TCI state indication according to Embodiment 3-1.
[FIG. 9] Fig. 9 is a diagram illustrating an example of a configuration of MAC CE according to Embodiment 3-1-2.
[FIG. 10] Fig. 10 is a diagram illustrating an example of TCI state indication according to Embodiment 3-2.
[FIG. 11] Fig. 11 is a diagram illustrating an example of a configuration of MAC CE according to Embodiment 3-2-1.
[FIG. 12] Fig. 12 is a diagram illustrating an example of a configuration of MAC CE according to Embodiment 3-2-2.
[FIG. 13] Fig. 13 is a diagram illustrating another example of a configuration of MAC CE according to Embodiment 3-2-2.
[FIG. 14] Fig. 14 is a diagram illustrating another example of a configuration of MAC CE according to Embodiment 3-2-2.
[FIG. 15] Fig. 15 is a diagram illustrating an example of a configuration of MAC CE according to a modification of a third embodiment.
[FIG. 16] Fig. 16 is a diagram illustrating another example of a configuration of MAC CE according to a modification of the third embodiment.
[FIG. 17] Fig. 17 is a diagram illustrating an example of a schematic configuration of a radio communication system according to one embodiment.
[FIG. 18] Fig. 18 is a diagram illustrating an example of a configuration of a base station according to one embodiment.
[FIG. 19] Fig. 19 is a diagram illustrating an example of a configuration of a user terminal according to one embodiment.
[FIG. 20] Fig. 20 is a diagram illustrating an example of a hardware configuration of the base station and the user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) of at least one of a signal and a channel (expressed as a signal/channel) in UE on the basis of a transmission configuration indication state (TCI state).

The TCI state may represent what is applied to a downlink signal/channel. Those corresponding to the TCI state applied to an uplink signal/channel may be expressed as a spatial relation.

The TCI state is information regarding a quasi-co-location (QCL) of the signal/channel, and may also be referred to as, for example, a spatial Rx parameter, spatial relation information, or the like. The TCI state may be configured in the UE for each channel or each signal.

The QCL is an indicator indicating a statistical property of a signal/channel. For example, when one signal/channel and another signal/channel have a QCL relation, this may mean that it is possible to assume that at least one of Doppler shift, Doppler spread, an average delay, a delay spread, and a spatial parameter (for example, a spatial Rx parameter) is identical (in QCL with respect to at least one of these) between the plurality of different signals/channels.

Note that the spatial Rx parameter may correspond to a reception beam of the UE (for example, a reception analog beam), and the beam may be specified on the basis of spatial QCL. The QCL (or at least one element of the QCL) in the present disclosure may be replaced with spatial QCL (sQCL).

A plurality of types of QCL (QCL types) may be defined. For example, four QCL types A to D with different parameters (or parameter sets) that can be assumed to be identical may be provided, ad these parameters (which may be referred to as QCL parameters) are as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel on the basis of a TCI state of the signal/channel or the QCL assumption.

The TCI state may be, for example, information regarding the QCL of a target channel (in other words, a reference signal (RS) for the channel) and another signal (for example, another RS). The TCI state may be configured (indicated) by higher layer signaling, physical layer signaling, or a combination thereof.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

In addition, an RS having a QCL relation with the channel may be, for example, at least one of a synchronization signal block (SSB), a channel state information reference signal (CSI-RS)), a sounding reference signal (SRS), a tracking CSI-RS (also referred to as a tracking reference signal (TRS)), and a QCL detection reference signal (also referred to as a QRS).

The SSB is a signal block including at least one of a primary synchronization signal (PSS), a secondary synchronization signal (SSS), and a physical broadcast channel (PBCH). The SSB may be referred to as an SS/PBCH block.

An RS of QCL type X in a TCI state may mean an RS in a QCL type X relation with (DMRS of) a certain channel/signal, and this RS may be referred to as a QCL source of QCL type X in the TCI state.

A QCL type A RS is always configured for the PDCCH and the PDSCH, and a QCL type D RS may be additionally configured. Since it is difficult to estimate a Doppler shift, a delay, and the like by receiving a one-shot DMRS, a QCL type A RS is used to improve channel estimation accuracy. A QCL type D RS is used for reception beam determination at the time of DMRS reception.

For example, TRSs 1-1, 1-2, 1-3, and 1-4 are transmitted, and a notification of TRS 1-1 is given as a QCL type C/D RS by the TCI state of the PDSCH. By being notified of the TCI state, the UE can use the information obtained from the results of the past periodic reception/measurement of TRS 1-1 for reception/channel estimation of a PDSCH DMRS. In this case, the QCL source of the PDSCH is TRS 1-1, and a QCL target is the PDSCH DMRS.

### (Multi-TRPs)

In NR, studies are underway to allow one or more transmission/reception points (TRPs)(multi-TRPs (MTRPs)) to perform DL transmission to the UE by using one or more panels (multi-panels). In addition, studies are underway to allow the UE to perform UL transmission to one or more TRPs by using one or more panels.

Note that the plurality of TRPs may correspond to the same cell identifier (ID), or may correspond to different cell IDs. The cell ID may be a physical cell ID or a virtual cell ID.

The multi-TRPs (for example, TRPs #1 and #2) are connected by an ideal/non-ideal backhaul, and information, data, and the like may be exchanged. A different codeword (CW) and a different layer may be transmitted from each TRP of the multi-TRPs. Non-coherent joint transmission (NCJT) may be used as one form of multi-TRP transmission.

In the NCJT, for example, TRP #1 performs modulation mapping and layer mapping on a first codeword, uses first precoding in a first number of layers (for example, two layers), and transmits a first PDSCH. In addition, TRP #2 performs modulation mapping and layer mapping on a second codeword, uses second precoding in a second number of layers (for example, two layers), and transmits a second PDSCH.

Note that a plurality of PDSCHs (multi-PDSCHs) subjected to the NCJT may be defined as partially or completely overlapping regarding at least one of time domain or frequency domain. That is, the first PDSCH from a first TRP and the second PDSCH from a second TRP may overlap in at least one of time resource or frequency resource.

The first PDSCH and the second PDSCH may be assumed not to be in quasi-co-location (QCL) relation (not quasi-co-located). Reception of the multi-PDSCHs may be replaced with simultaneous reception of PDSCHs that are not of a certain QCL type (for example, QCL type D).

A plurality of PDSCHs (which may be referred to as multiple PDSCHs) from the multi-TRPs may be scheduled by using one piece of DCI (single DCI, single PDCCH) (single master mode, single-DCI-based multi-TRPs). A plurality of PDSCHs from the multi-TRPs may be scheduled by using a plurality of pieces of DCI (multi-DCI or multiple PDCCHs) (multi-master mode, multi-DCI-based multi-TRPs).

In URLLC for multi-TRPs, support of PDSCH (transport block (TB) or codeword (CW)) repetition across the multi-TRPs has been studied. It has been studied that a repetition method (URLLC schemes, e.g., Schemes 1, 2a, 2b, 3, and 4) across multi-TRPs on a frequency domain, a layer (spatial) domain, or a time domain is supported. In Scheme 1, multi-PDSCHs from multi-TRPs are subjected to space division multiplexing (SDM). In Schemes 2a and 2b, PDSCHs from multi-TRPs are subjected to frequency division multiplexing (FDM). In Scheme 2a, the redundancy version (RV) is the same for multi-TRPs. In Scheme 2b, the RV may be the same or different for multi-TRPs. In Schemes 3 and 4, multi-PDSCHs from multi-TRPs are subjected to time division multiplexing (TDM). In Scheme 3, multi-PDSCHs from multi-TRPs are transmitted in one slot. In Scheme 4, multi-PDSCHs from multi-TRPs are transmitted in different slots.

Such a multi-TRPs scenario can perform more flexible transmission control using a high-quality channel.

In RRC configuration information for linking a plurality of pairs of PDCCHs and PDSCHs having a plurality of TRPs, one control resource set (CORESET) in PDCCH configuration information (PDCCH-Config) may correspond to one TRP, to support intra-cell (having the same cell ID) and inter-cell (having different cell IDs) multi-TRP transmission based on the plurality of PDCCHs.

When at least one of the conditions 1 and 2 described below is satisfied, the UE may judge that it is multi-DCI-based multi-TRPs. In this case, the TRP may be replaced with a CORESET pool index.

### [Condition 1]

A CORESET pool index of 1 is configured.

### [Condition 2]

Two different values (for example, 0 and 1) of the CORESET pool index are configured.

When the condition described below is satisfied, the UE may judge that it is single-DCI-based multi-TRPs. In this case, the two TRPs may be replaced with two TCI states indicated by the MAC CE/DCI.

### [Condition]

In order to indicate one or two TCI states for one codepoint in the TCI field in the DCI, an "enhanced TCI states activation/deactivation for UE-specific PDSCH MAC CE" is used.

The DCI for the common beam indication may be a UE-specific DCI format (for example, DL DCI format (for example, 1_1 and 1_2), UL DCI format (for example, 0 1 and 0_2)) or a UE-group common DCI format.

### (Simultaneous Beam Update of Plurality of CCs)

In Rel. 16, one MAC CE can update beam indexes (TCI states) of a plurality of CCs.

The UE may have up to two applicable CC lists (for example, applicable-CC-lists) configured by RRC. When the two applicable CC lists are configured, the two applicable CC lists may respectively correspond to intra-band CA in FR1 and intra-band CA in FR2.

The activation MAC CE of the TCI state of the PDCCH activates the TCI state associated with the same CORESET ID on all BWPs/CCs in the applicable CC list.

The activation MAC CE of the TCI state of the PDSCH activates the TCI state on all the BWPs/CCs in the applicable CC list.

The activation MAC CE of the spatial relation of A-SRS/SP-SRS activates the spatial relation associated with the same SRS resource ID on all BWPs/CCs in the applicable CC list.

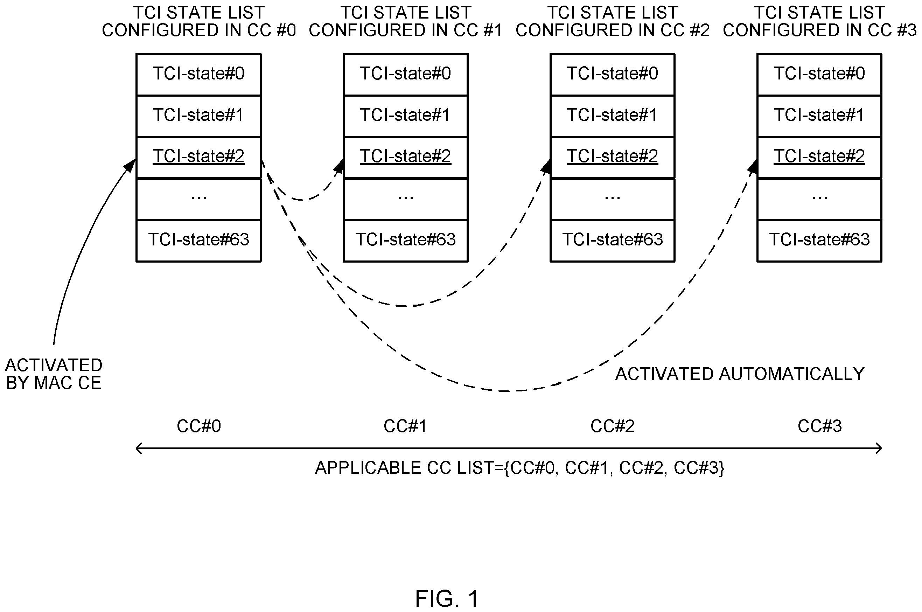

In the example of Fig. 1, the UE is configured with an applicable CC list indicating CCs #0, #1, #2, and #3 and a list indicating 64 TCI states for CORESET or PDSCH of each CC. When one TCI state for CC #0 is activated by the MAC CE, the corresponding TCI state is activated in CCs #1, #2, and #3.

It has been studied that such simultaneous beam update is applicable only to a single TRP case.

For the PDSCH, the UE may be based on the procedure A below.

### [Procedure A]

The UE receives an activation command to map up to 8 TCI states to a codepoint of a DCI field (TCI field) within one CC/DL BWP or within one set of CC/BWP. If one set of TCI state IDs is activated for one set of CC/DL BWP, the applicable list of CCs is determined by the indicated CC in the activation command and the same set of TCI states is applied to all DL BWPs in the indicated CC. One set of TCI state IDs may be activated for one set of CC/DL BWP only when the UE is not provided with different values of the CORESET pool index (CORESETPoolIndex) in the CORESET information element (ControlResourceSet) or at least one TCI codepoint mapped to two TCI states.

For the PDCCH, the UE may be based on the procedure B below.

### [Procedure B]

When the UE is provided with a list of up to two cells for simultaneous TCI state activation with a simultaneous TCI update list (at least one of simultaneousTCI-UpdateList-r16 and simultaneousTCI-UpdateListSecond-r16) by a simultaneous TCI cell list (simultaneousTCI-CellList), the UE applies an antenna port quasi co-location (QCL) provided by the TCI state having the same activated TCI state ID value to the CORESET with an index p in all configured DL BWPs of all configured cells in one list determined from a serving cell index provided by the MAC CE command. A simultaneous TCI cell list can be provided for simultaneous TCI state activation only when the UE is not provided with different values of the CORESET pool index (CORESETPoolIndex) in the CORESET information element (ControlResourceSet) or at least one TCI codepoint mapped to two TCI states.

For semi-persistent (SP)/aperiodic (AP)-SRS, the UE may be based on the procedure C described below.

### [Procedure C]

For one set of CC/BWP, when spatial relation information (spatialRelationInfo) for an SP or AP-SRS resource configured by the SRS resource information element (higher layer parameter SRS-Resource) is activated/updated by the MAC CE, the applicable list of CCs is indicated by the simultaneous spatial update list (higher layer parameter simultaneousSpatial-UpdateList-r16 or simultaneousSpatial-UpdateListSecond-r16), and the spatial relation information is applied to the SP or AP-SRS resource with the same SRS resource ID in all BWPs in the indicated CC. Only when the UE is not provided with different values of the CORESET pool index (CORESETPoolIndex) in the CORESET information element (ControlResourceSet) or at least one TCI codepoint mapped to two TCI states, for one set of CC/BWP, the spatial relation information (spatialRelationInfo) for the SP or AP-SRS resources configured by the SRS resource information element (higher layer parameter SRS-Resource) is activated/updated by the MAC CE.

The simultaneous TCI cell list (simultaneousTCI-CellList) and simultaneous TCI update list (at least one of simultaneousTCI-UpdateList1-r16 and simultaneousTCI-UpdateList2-r16) are a list of serving cells in which the TCI relation can be simultaneously updated by using the MAC CE. SimultaneousTCI-UpdateList1-r16 and simultaneousTCI-UpdateList2-r16 do not include the same serving cell.

The simultaneous spatial update list (at least one of the higher layer parameters simultaneousSpatial-UpdatedList1-r16 and simultaneousSpatial-UpdatedList2-r16) is a list of serving cells in which the spatial relation can be simultaneously updated by using the MAC CE. SimultaneousSpatial-UpdatedListl-r16 and simultaneousSpatial-UpdatedList2-r16 do not include the same serving cell.

Here, the simultaneous TCI update list and the simultaneous spatial update list are configured by the RRC, the CORESET pool index of the CORESET is configured by the RRC, and the TCI codepoint mapped to the TCI state is indicated by the MAC CE.

### (Unified/Common TCI Framework)

According to the unified TCI framework, UL and DL channels can be controlled by a common framework. The unified TCI framework may indicate the common beam (common TCI state) and apply it to all UL and DL channels, or apply the common beam for UL to all UL channels and apply the common beam for DL to all DL channels, instead of defining the TCI state or spatial relation for each channel as in Rel. 15.

One common beam for both DL and UL, or a common beam for DL and a common beam for UL (two common beams in total) has been studied.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool, and DL common TCI pool) for each of UL and DL.

The UL and DL default beams may be aligned by beam management based on MAC CE (MAC CE level beam indication). The default TCI state of the PDSCH may be updated to match the default UL beam (spatial relation).

Beam management based on the DCI (DCI level beam indication) may indicate the common beam/unified TCI state from the same TCI pool (joint common TCI pool, joint TCI pool, set) for both UL and DL. X (> 1) TCI states may be activated by the MAC CE. The UL/DL DCI may select one from the X active TCI states. The selected TCI state may be applied to the channels/RSs of both UL and DL.

The TCI pool (set) may be a plurality of TCI states configured by the RRC parameter, or may be a plurality of TCI states (active TCI state, active TCI pool, set) activated by the MAC CE among the plurality of TCI states configured by the RRC parameter. Each TCI state may be a QCL type A/D RS. The SSB, the CSI-RS, or the SRS may be configured as the QCL type A/D RS.

The number of TCI states corresponding to each of one or more TRPs may be defined. For example, the number N (≥ 1) of TCI states (UL TCI states) applied to the UL channel/RS and the number M (≥ 1) of TCI states (DL TCI states) applied to the DL channel/RS may be defined. At least one of N and M may be given in notification/configured/indicated to the UE via higher layer signaling/physical layer signaling.

In the present disclosure, when described as N = M = X (X is any integer), it may mean that the UE is notified/configured/indicated of a TCI state (joint TCI state) common to X (corresponding to X TRPs) ULs and DLs. In addition, when described as N = X (X is any integer) and M = Y (Y is any integer, Y = X may be possible), it may mean that X (corresponding to X TRPs) UL TCI states and Y (corresponding to Y TRPs) DL TCI states (that is, separate TCI state) are respectively given in notification/configured/indicated to the UE.

For example, when described as N = M = 1, it may mean that a TCI state common to one UL and DL for a single TRP is given in notification/configured/indicated to the UE (joint TCI state for a single TRP).

In addition, for example, when described as N = 1 and M = 1, it may mean that one UL TCI state and one DL TCI state for a single TRP are separately given in notification/configured/indicated to the UE (separate TCI state for a single TRP).

In addition, for example, when described as N = M = 2, it may mean that a TCI state common to a plurality of (two) ULs and DLs for a plurality of (two) TRPs is given in notification/configured/indicated to the UE (joint TCI state for a plurality of TRPs).

In addition, for example, when described as N = 2 and M = 2, it may mean that a plurality of (two) UL TCI states and a plurality of (two) DL TCI states for a plurality of (two) TRPs are given in notification/configured/indicated to the UE (separate TCI state for a plurality of TRPs).

Note that, in the above example, the case where the values of N and M are 1 or 2 has been described, but the values of N and M may be 3 or more, and may be different for N and M.

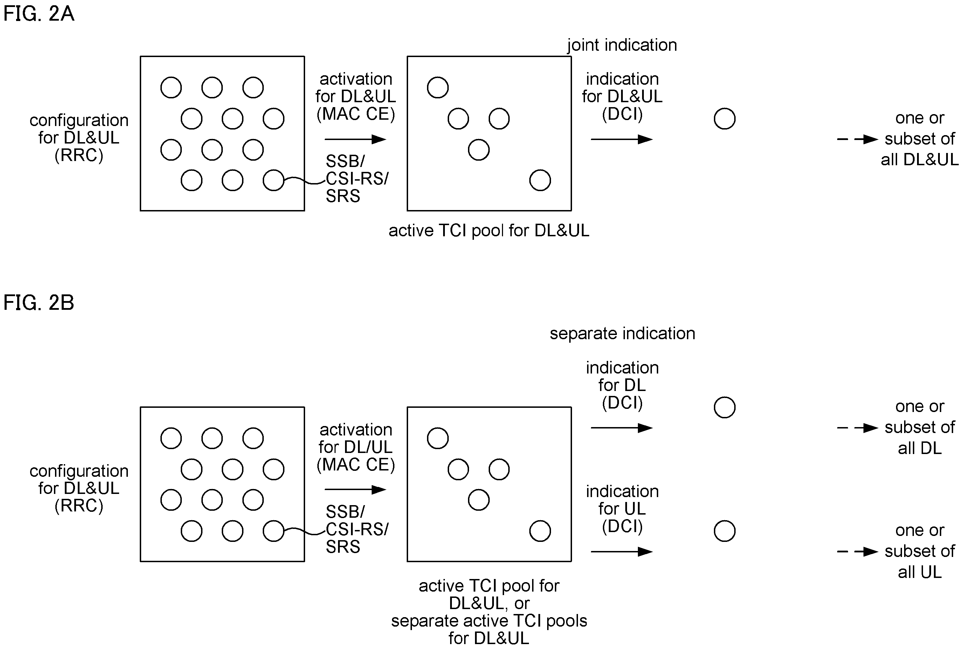

In the example of Fig. 2A, the RRC parameter (information element) configures a plurality of TCI states for both DL and UL. The MAC CE may activate a plurality of TCI states among the plurality of TCI states configured. The DCI may indicate one of the plurality of TCI states activated. The DCI may be UL/DL DCI. The indicated TCI state may be applied to at least one (or all) of the UL/DL channels/RSs. One piece of DCI may indicate both UL TCI and DL TCI.

In the example of Fig. 2A, one point may be one TCI state applied to both UL and DL, or two TCI states applied to UL and DL, respectively.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) for configuring the plurality of TCI states may be referred to as configuration information for configuring the plurality of TCI states, and may be simply referred to as "configuration information". In addition, in the present disclosure, the indication of one of the plurality of TCI states by using the DCI may be receiving indication information indicating one of the plurality of TCI states included in the DCI, or may be simply receiving "indication information".

In the example of Fig. 2B, the RRC parameter configures a plurality of TCI states for both DL and UL (joint common TCI pool). The MAC CE may activate a plurality of TCI states (active TCI pool) among the plurality of TCI states configured. Active TCI pools (separate) for UL and DL may be configured/activated.

DL DCI or a new DCI format may select (indicate) one or more (for example, one) TCI states. The selected TCI state may be applied to one or more (or all) DL channels/RSs. The DL channel may be PDCCH/PDSCH/CSI-RS. The UE may determine the TCI state of each channel/RS of the DL using the operation of the TCI state in Rel. 16 (TCI framework). UL DCI or a new DCI format may select (indicate) one or more (for example, one) TCI states. The selected TCI state may be applied to one or more (or all) UL channels/RSs. The UL channel may be PUSCH/SRS/PUCCH. In this way, different pieces of DCI may separately indicate UL TCI and DL DCI.

The existing DCI format 1_1/1_2 may be used to indicate the common TCI state.

The common TCI framework may have separate TCI states for DL and UL.

### (MAC CE)

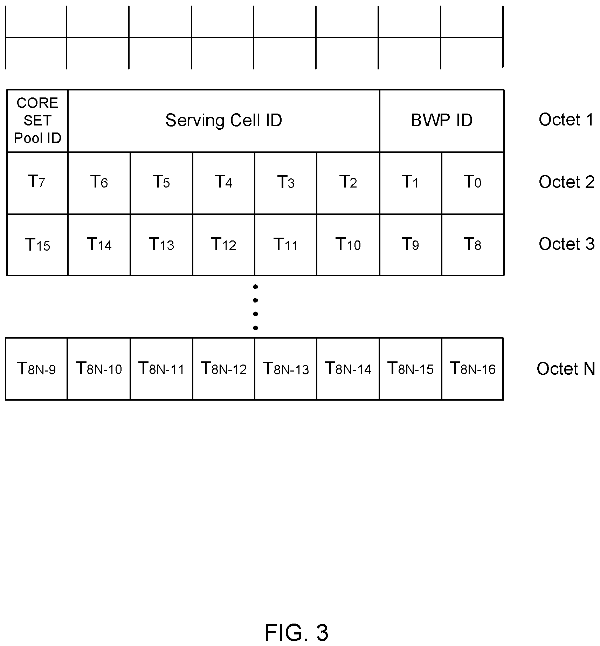

In Rel. 16, the MAC CE (TCI states activation/deactivation for UE-specific PDSCH MAC CE) is used for activation/deactivation of the TCI state of the UE-specific PDSCH (see Fig. 3).

The MAC CE is identified by a MAC subheader having a logical channel ID (LCID).

The MAC CE may be used in an environment using a single TRP or multi-DCI-based multi-TRPs.

The MAC CE may include a serving cell ID field, a BWP ID field, a field (Tᵢ) for indicating activation/deactivation of the TCI state, and a CORESET pool ID field.

The serving cell ID field may be a field for indicating a serving cell to which the MAC CE is applied. The BWP ID field may be a field for indicating a DL BWP to which the MAC CE is applied. The CORESET pool ID field may be a field indicating that the correspondence (mapping) between the activated TCI state and the codepoint (codepoint of the DCI TCI) of the TCI field indicated by the DCI set in the field Tᵢ is specific to the ControlResourceSetId configured in the CORESET pool ID.

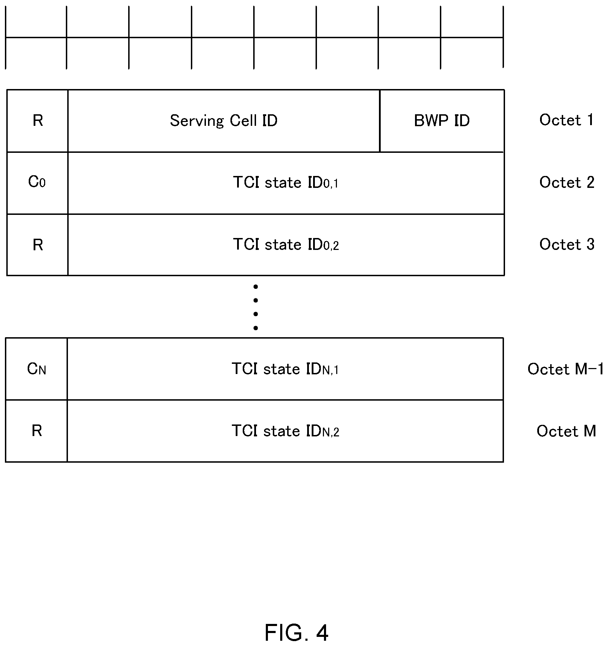

In addition, in Rel. 16, the MAC CE (enhanced TCI states activation/deactivation for UE-specific PDSCH MAC CE) is used for activation/deactivation of the TCI state of the UE-specific PDSCH (see Fig. 4).

The MAC CE is identified by a MAC PDU subheader having an eLCID.

The MAC CE may be used in an environment using single-DCI-based multi-TRPs.

The MAC CE may include a serving cell ID field, a BWP ID field, a field (TCI state ID_{i,j} (i is an integer from 0 to N, and j is 1 or 2)) for indicating a TCI state identified by a TCI-StateID, a field (Cᵢ) indicating whether or not a TCI state ID_{i,2} exists in a corresponding octet, and a reserved bit field (R, set to 0).

"i" may correspond to an index of the codepoint in a TCI field indicated by the DCI. "TCI state ID_{i,j}" may indicate a j-th TCI state of the codepoint of an i-th TCI state field.

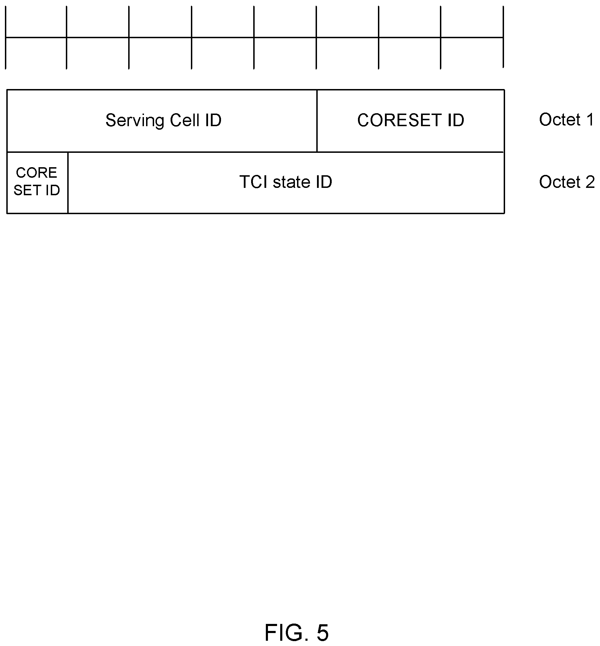

In addition, in Rel. 16, the MAC CE (TCI state indication for UE-specific PDCCH MAC CE) is used for activation/deactivation of the TCI state of the UE-specific PDCCH/CORESET (see Fig. 5).

The MAC CE is identified by a MAC subheader having an LCID.

The MAC CE may include a serving cell ID field, a field indicating a CORESET (CORESET ID) indicating a TCI state, and a field (TCI state ID) indicating a TCI state applicable to the CORESET identified by the CORESET ID.

### (Analysis)

In Rel. 17 and subsequent releases, when the joint TCI state and the separate TCI state (DL only TCI state/UL only TCI state/DL and UL TCI state) are configured, it is studied to indicate activation of at least one of the joint TCI state and the separate TCI state by using the MAC CE.

However, the indication method using the MAC CE, the configuration of the MAC CE, and the like are not sufficiently studied. When this study is not sufficient, the TCI state cannot be appropriately indicated, and communication quality, throughput, and the like may deteriorate.

Therefore, the present inventors have conceived an indication method using the MAC CE and the configuration of the MAC CE when indicating the unified/common TCI.

Hereinafter, embodiments according to the present disclosure will be described in detail with reference to the drawings. The radio communication methods according to the embodiments may be applied alone or in combination.

In the present disclosure, "A/B/C" and "at least one of A, B and C" may be replaced with each other. In the present disclosure, the cell, the serving cell, the CC, the carrier, the BWP, the DL BWP, the UL BWP, the active DL BWP, the active UL BWP, and the band may be replaced with each other. In the present disclosure, an index, an ID, an indicator, and a resource ID may be replaced with each other. In the present disclosure, support, control, controllable, operate, and operable may be replaced with each other.

In the present disclosure, configure, activate, update, indicate, enable, specify, and select may be replaced with each other.

In the present disclosure, the higher layer signaling may be any of, for example, radio resource control (RRC) signaling, medium access control (MAC) signaling, broadcast information, and the like, or a combination thereof. In the present disclosure, the RRC, the RRC signaling, the RRC parameter, the higher layer, the higher layer parameter, the RRC information element (IE), and the RRC message may be replaced with each other.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

In the present disclosure, the MAC CE and the activation/deactivation command may be replaced with each other.

In the present disclosure, the pool, the set, the group, the list, and the candidate may be replaced with each other.

In the present disclosure, the DMRS, the DMRS port, and the antenna port may be replaced with each other.

In the present disclosure, the special cell, the SpCell, the PCell, and the PSCell may be replaced with each other.

In the present disclosure, the beam, the spatial domain filter, the spatial setting, the TCI state, the UL TCI state, the unified TCI state, the unified beam, the common TCI state, the common beam, the TCI assumption, the QCL assumption, the QCL parameter, the spatial domain reception filter, the UE spatial domain reception filter, the UE reception beam, the DL beam, the DL reception beam, the DL precoding, the DL precoder, the DL-RS, the QCL type D RS of the TCI state/QCL assumption, the QCL type A RS of the TCI state/QCL assumption, the spatial relation, the spatial domain transmission filter, the UE spatial domain transmission filter, the UE transmission beam, the UL beam, the UL transmission beam, the UL precoding, the UL precoder, and the PL-RS may be replaced with each other. In the present disclosure, the QCL type X-RS, the DL-RS associated with QCL type X, the DL-RS with QCL type X, a source of the DL-RS, the SSB, the CSI-RS, and the SRS may be replaced with each other.

In the present disclosure, the common beam, the common TCI, the common TCI state, the unified TCI, the unified TCI state, the TCI state applicable to DL and UL, the TCI state applied to a plurality of (a plurality of types of) channels/RSs, the TCI state applicable to a plurality of types of channels/RSs, and the PL-RS may be replaced with each other.

In the present disclosure, the plurality of TCI states configured by the RRC, the plurality of TCI states activated by the MAC CE, the pool, the TCI state pool, the active TCI state pool, the common TCI state pool, the joint TCI state pool, the separate TCI state pool, the common TCI state pool for UL, the common TCI state pool for DL, the common TCI state pool configured/activated by the RRC/MAC CE, and the TCI state information may be replaced with each other.

In the present disclosure, the panel, the uplink (UL) transmission entity, the TRP, the spatial relation, the control resource set (CORESET), the PDSCH, the codeword, the base station, the antenna port (for example, a demodulation reference signal (DMRS) port) of a signal, the antenna port group (for example, a DMRS port group) of a signal, the group for multiplexing (for example, a code division multiplexing (CDM) group, a reference signal group, and a CORESET group), the CORESET pool, the CORESET subset, the CW, the redundancy version (RV), and the layer (MIMO layer, transmission layer, and spatial layer) may be replaced with each other. In addition, the panel identifier (ID) and the panel may be replaced with each other. In the present disclosure, the TRP ID, the TRP-related ID, the CORESET pool index, the location (ordinal number, first TCI state or second TCI state) of one TCI state of two TCI states corresponding to one codepoint of a field in the DCI, and the TRP may be replaced with each other.

In the present disclosure, the TRP, the transmission point, the panel, the DMRS port group, the CORESET pool, and one of two TCI states associated with one codepoint of the TCI field may be replaced with each other.

In the present disclosure, the single TRP, the single TRP system, the single TRP transmission, and the single PDSCH may be replaced with one another. In the present disclosure, the multi-TRPs, the multi-TRP system, the multi-TRP transmission, and the multi-PDSCHs may be replaced with each other. In the present disclosure, the single DCI, the single PDCCH, the single-DCI-based multi-TRPs, and that two TCI states on at least one TCI codepoint are activated may be replaced with each other.

In the present disclosure, the single TRP, the channel using a single TRP, the channel using one TCI state/spatial relation, that the multi-TRPs are not enabled by the RRC/DCI, that the multiple TCI states/spatial relations are not enabled by the RRC/DCI, and that a CORESET pool index (CORESETPoolIndex) value of 1 is not configured for any CORESET and no codepoint in the TCI field is mapped to two TCI states may be replaced with each other.

In the present disclosure, the multi-TRPs, the channel using multi-TRPs, the channel using a plurality of TCI states/spatial relations, that the multi-TRPs are enabled by the RRC/DCI, that the plurality of TCI states/spatial relations are enabled by the RRC/DCI, and at least one of the single-DCI-based multi-TRPs and the multi-DCI-based multi-TRPs may be replaced with each other. In the present disclosure, the multi-DCI-based multi-TRPs and that a CORESET pool index (CORESETPoolIndex) value of 1 is configured for the CORESET may be replaced with each other. In the present disclosure, the single-DCI-based multi-TRPs and that at least one codepoint of the TCI field is mapped to two TCI states may be replaced with each other.

In the present disclosure, TRP #1 (first TRP) may correspond to CORESET pool index = 0, or may correspond to a first TCI state of two TCI states corresponding to one codepoint of the TCI field. TRP #2 (second TRP) may correspond to CORESET pool index = 1, or may correspond to a second TCI state of two TCI states corresponding to one codepoint of the TCI field.

### (Radio Communication Method)

In the present disclosure, the DL TCI, the DL only TCI, the separate DL only TCI, the DL common TCI, the DL unified TCI, the common TCI, and the unified TCI may be replaced with each other. In the present disclosure, the UL TCI, the UL only TCI, the separate UL only TCI, the UL common TCI, the UL unified TCI, the common TCI, and the unified TCI may be replaced with each other.

In the present disclosure, configuring/indicating/updating the separate TCI state, configuring/indicating the DL only TCI state, configuring/indicating/updating the UL only TCI state, and configuring/indicating/updating the DL and UL TCI state may be replaced with each other.

In the present disclosure, the case of the joint TCI pool and the case where the joint TCI pool is configured may be replaced with each other. In the present disclosure, the case of the separate TCI pool and the case where the separate TCI pool is configured may be replaced with each other.

In the present disclosure, the case where the joint TCI pool is configured, the case where the TCI pool configured for DL and the TCI pool configured for UL are common, the case where the TCI pool for both DL and UL is configured, and the case where one TCI pool (one set of TCIs) is configured may be replaced with each other.

In the present disclosure, the case where the separate TCI pool is configured, the case where the TCI pool configured for DL and the TCI pool configured for UL are different, the case where the TCI pool for DL (first TCI pool, first TCI set) and the TCI pool for UL (second TCI pool, second TCI set) are configured, the case where a plurality of TCI pools (a plurality of sets of TCIs) is configured, and the case where the TCI pool for DL is configured may be replaced with each other. When the TCI pool for DL is configured, the TCI pool for UL may be equal to the configured TCI pool.

In the present disclosure, the channel/RS to which the common TCI is applied may be PDSCH/HARQ-ACK information/PUCCH/PUSCH/CSI-RS/SRS.

In each embodiment of the present disclosure, the pool (list) including a plurality of unified TCI states may be configured/activated and one or more TCI states of the plurality of unified TCI states may be indicated for the UE. The configuring/activation may be performed using configuration information transmitted via higher layer signaling (for example, RRC signaling/MAC CE). The indication may be performed using indication information transmitted by using the DCI.

Note that, in the present disclosure, the signaling configuration, the signaling, the configuring, the configuration, the configuration information, the indication, the indication information, and the like may be replaced with each other.

### <First Embodiment>

In the unified TCI state framework, the UE may activate at least one of the joint TCI state and the separate TCI state by activation of the TCI state based on the MAC CE. The UE may configure/indicate/update at least one of the joint TCI state and the separate TCI state in different TCI fields (codepoints).

The UE may utilize the TCI field of a specific DCI format to update/change/configure the joint TCI state when the TCI state is activated for the joint TCI state. The specific DCI format may be, for example, a DCI format (DCI format 1_1/1_2) used for beam indication.

The UE may utilize the TCI field of the specific DCI format to update/change/configure at least one of the DL only TCI state, the UL only TCI state, and the DL and UL TCI state when the TCI state is activated for the separate TCI state. The specific DCI format may be, for example, a DCI format (DCI format 1_1/1_2) used for beam indication.

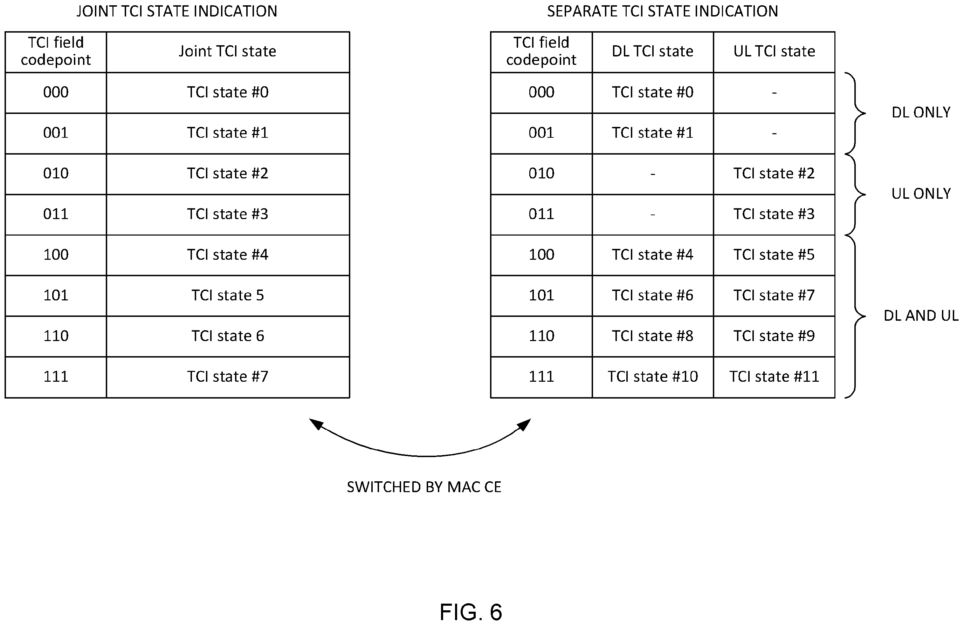

The UE may be configured with both the joint TCI state pool (a plurality of TCI states applicable to UL and DL) and the separate TCI state pool (at least one of a plurality of TCI states applicable to UL and a plurality of TCI states applicable to UL) by using an RRC IE. Fig. 6 is a diagram illustrating an example of switching by MAC CE according to the first embodiment. Any one of the association related to the joint TCI state and the association related to the separate TCI state is configured for the UE by the MAC CE for activation/deactivation of the TCI state.

In Fig. 6, activation of the TCI state for the joint TCI state or activation of the TCI state for the separate TCI state is indicated to the UE by the MAC CE. When activation of the joint TCI state is indicated, one TCI state (TCI state common to DL and UL) by one codepoint of a field of the TCI state indication in the DCI by utilizing association related to the joint TCI state is indicated to the UE. When activation of the separate TCI state is configured, one or more (for example, two) TCI states (one of one TCI state of DL only (codepoint = 000 to 001), one TCI state of UL only (codepoint = 010 to 100), a combination of one TCI state of DL only and one TCI state of UL only (codepoint = 100 to 111)) is indicated to the UE by one codepoint of the field of the TCI state indication in the DCI by utilizing the association related to the separate TCI state.

Note that the association in Fig. 6 is an example and is not limited thereto. For example, the number of TCI states, the number of bits of the TCI field, and the TCI state ID included in the association are not limited thereto. In addition, the association related to the joint TCI state and the association related to the separate TCI state may be different associations or may be a common association.

As described above, according to the first embodiment, even when the TCI state is activated by the MAC CE, the TCI state can be appropriately configured/indicated/updated.

### <Second Embodiment>

In the second embodiment, the joint TCI state and the separate TCI state configured for the UE will be described.

The joint TCI state configured by the RRC signaling and the separate TCI state configured by the RRC may be association (parameter/list/set/pool) by different RRC. The UE may be configured with the joint TCI state configured by the RRC signaling and the separate TCI state configured by the RRC separately (by different association).

In addition, the joint TCI state configured by the RRC signaling and the separate TCI state configured by the RRC may be association (parameter/list/set/pool) by common RRC. The UE may be configured with the joint TCI state configured by the RRC signaling and the separate TCI state configured by the RRC in common (by common association).

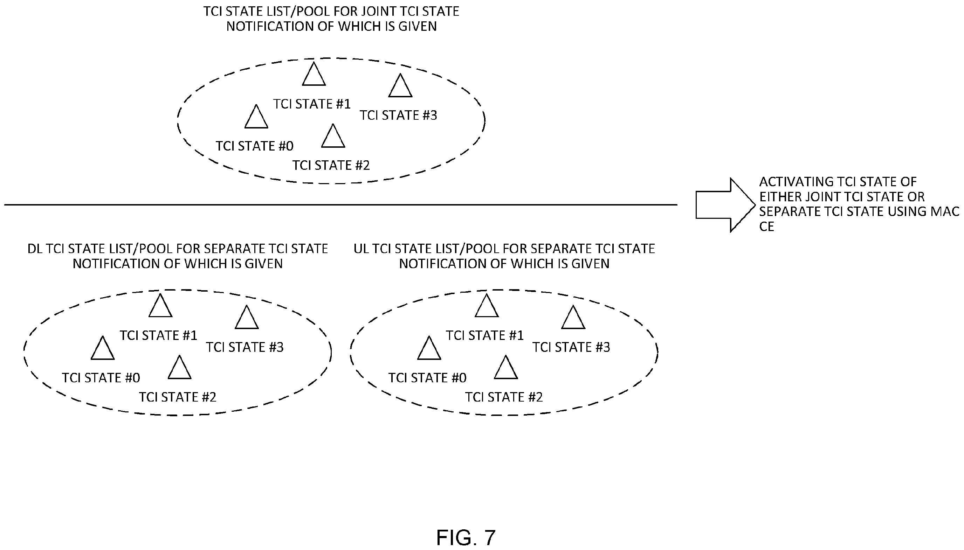

Fig. 7 is a diagram illustrating an example of configuration of a TCI state by higher layer signaling according to the second embodiment. As illustrated in the example of Fig. 7, list/pool including one or more TCI states is configured for the UE by using higher layer signaling (for example, RRC signaling). In the example illustrated in Fig. 7, the joint TCI state configured/given in notification by the RRC signaling and the separate TCI state configured/given in notification by the RRC use association (parameter/list/set/pool) by different RRC. For the UE, the TCI state of either the joint TCI state or the separate TCI state is activated by the MA CE. Next, the UE may determine the TCI state to apply to at least one of the DL signal/channel and the UL signal/channel on the basis of the list/pool and the codepoint of the TCI state field included in the DCI.

Activation of the TCI state regarding at least one of the joint TCI state and the separate TCI state by the MAC CE may be indicated to the UE.

In a certain CC/BWP, the joint TCI state or the separate TCI state may be activated simultaneously.

The activation of a certain TCI state may be performed after another TCI state is deactivated.

For example, when the separate TCI state is activated, there may be no active joint TCI state (the joint TCI state may be deactivated). In addition, for example, when the joint TCI state is activated, there may be no active separate TCI state (the separate TCI state may be deactivated).

In addition, when activating a certain TCI state, deactivation of another TCI state may be unnecessary. Thus, the number of times of notification of the MAC CE for activation and deactivation can be reduced.

For example, when at least one separate TCI state is activated, the active joint TCI state may be deactivated. The UE may determine that the active joint TCI state is deactivated when at least one separate TCI state is activated.

In addition, for example, when at least one joint TCI state is activated, the active separate TCI state may be deactivated. The UE may determine that the active separate TCI state is deactivated when at least one joint TCI state is activated.

A delay time/timeline/minimum requirement between the reception (transmission) of the MAC CE indicating the activation/deactivation of the TCI state and the activation/deactivation may be defined. The UE may control the activation/deactivation of the TCI state on the basis of the delay time/timeline/minimum requirement.

For example, the UE may perform the activation/deactivation of the TCI state after a specific time from the transmission of the HARQ-ACK to the MAC CE (for example, the MAC CE in the PDSCH). The specific time may be a specific time unit (for example, at least one of a slot unit, a symbol unit, a sub-slot unit, a subframe unit, and a frame unit) or an arbitrary time (for example, 3 ms).

In addition, the delay time/timeline/minimum requirement may be separately defined on the basis of whether the TCI state is a known or unknown. For example, in a case where the TCI state other than the active TCI state of the PDSCH is activated for the PDCCH even in a case where the known TCI state is activated, the UE may wait for the reception of the SSB (in addition to the time required for the SSB reception) and perform the activation of the TCI state.

According to the second embodiment described above, the TCI state (list/pool of TCI states) can be appropriately configured for the UE.

### <Third Embodiment>

In the third embodiment, the configuration of the MAC CE indicating activation/deactivation of the TCI state in the unified TCI state framework will be described.

The third embodiment is roughly divided into Embodiment 3-1 and Embodiment 3-2.

### <<Embodiment 3-1>>

The MAC CE (first MAC CE) indicating the joint TCI and the MAC CE (second MAC CE) indicating the separate TCI state may be different MAC CEs. In other words, the first MAC CE and the second MAC CE may be different configurations/forms.

The first MAC CE may indicate only the joint TCI state. The UE may be indicated to activate/deactivate the joint TCI state on the basis of the first MAC CE.

For the UE, one TCI state (TCI state ID) may be indicated for each TCI field (codepoint) of the DCI by using the first MAC CE.

The second MAC CE may indicate only the separate TCI state. The UE may be indicated to activate/deactivate the separate TCI state on the basis of the second MAC CE.

For the UE, one TCI state (for example, the DL only TCI state or the UL only TCI state) or two TCI states (DL and UL TCI state) may be indicated for each TCI field (codepoint) of the DCI by using the second MAC CE.

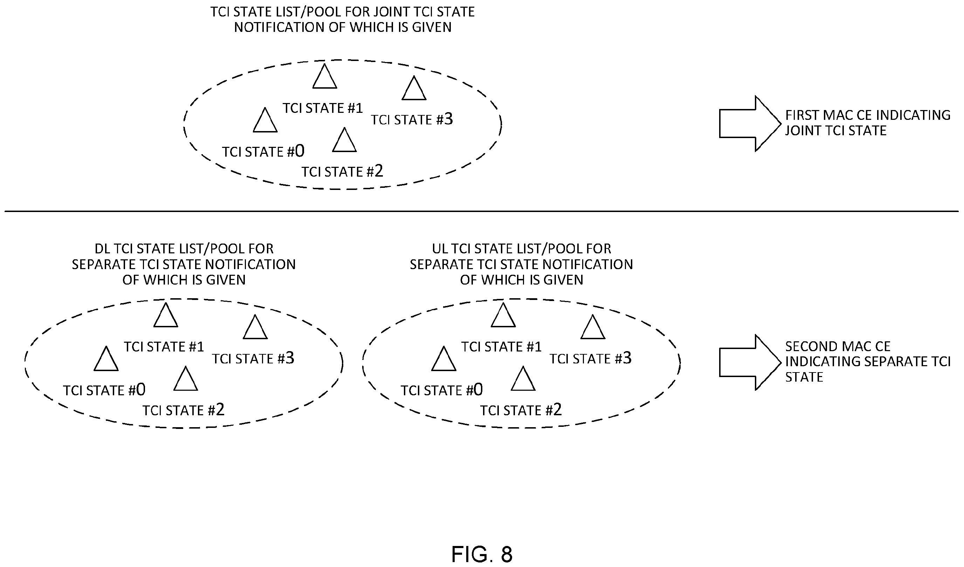

Fig. 8 is a diagram illustrating an example of TCI state indication according to Embodiment 3-1. A list/pool including one or more TCI states is configured for the UE using higher layer signaling (for example, RRC signaling) as described in the second embodiment. The joint TCI state is indicated by using the first MAC CE and the separate TCI state is indicated by using the second MAC CE to the UE.

Note that, in the present disclosure, the UE may determine whether the MAC CE notification of which is given is a MAC CE in the unified TCI framework or an existing MAC CE (defined in Rel. 15/16) according to at least one of a specific bit field (for example, reserved bit), a MAC subheader, and an LCID that are included in the

### MAC CE.

### [Embodiment 3-1-1]

A MAC CE defined in Rel. 15/16 may be used for at least one of the first MAC CE and the second MAC CE.

A MAC CE defined in Rel. 15/16 may be diverted for at least one of the first MAC CE and the second MAC CE. In addition, at least one of the first MAC CE and the second MAC CE may be a MAC CE obtained by extending the MAC CE defined in Rel. 15/16.

For example, the first MAC CE may be a MAC CE indicating activation/deactivation of the TCI state of the UE-specific PDSCH (for example, TCI states activation/deactivation for UE-specific PDSCH MAC CE) (see Fig. 3).

For example, the second MAC CE may be a MAC CE indicating activation/deactivation of the TCI state of the UE-specific PDSCH (for example, enhanced TCI states activation/deactivation for UE-specific PDSCH MAC CE) (see Fig. 4).

Note that, in the present disclosure, the first MAC CE and the second MAC CE may be replaced with each other.

### [Embodiment 3-1-2]

At least one of the first MAC CE and the second MAC CE may use a MAC CE defined in Rel. 17 and subsequent releases (which may be referred to as a new MAC CE). Also in Embodiment 3-1-2, as in Embodiment 3-1-1 described above, a MAC CE defined in Rel. 15/16 may be used for at least one of the first MAC CE and the second MAC CE.

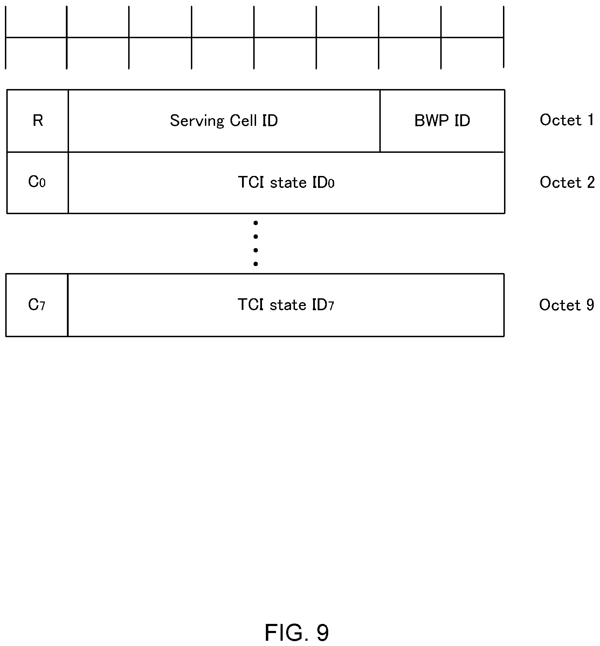

The new MAC CE may be a MAC CE that gives a notification of/indicates one TCI state ID corresponding to a codepoint of each TCI field included in the DCI. For example, the MAC CE may be used as the first MAC CE (see Fig. 9).

The new MAC CE may be a MAC CE that gives a notification of/indicates one or more (for example, two) TCI state IDs corresponding to a codepoint of each TCI field included in the DCI. For example, the MAC CE may be used as the second MAC CE. The second MAC CE may be the MAC CE illustrated in Fig. 4.

### <<Embodiment 3-2>>

The MAC CE (first MAC CE) indicating the joint TCI and the MAC CE (second MAC CE) indicating the separate TCI state may be a common MAC CE. In other words, the first MAC CE and the second MAC CE may be a common (same) configuration/form. At least one of the joint TCI state and the separate TCI state may be indicated to the UE on the basis of the common MAC CE.

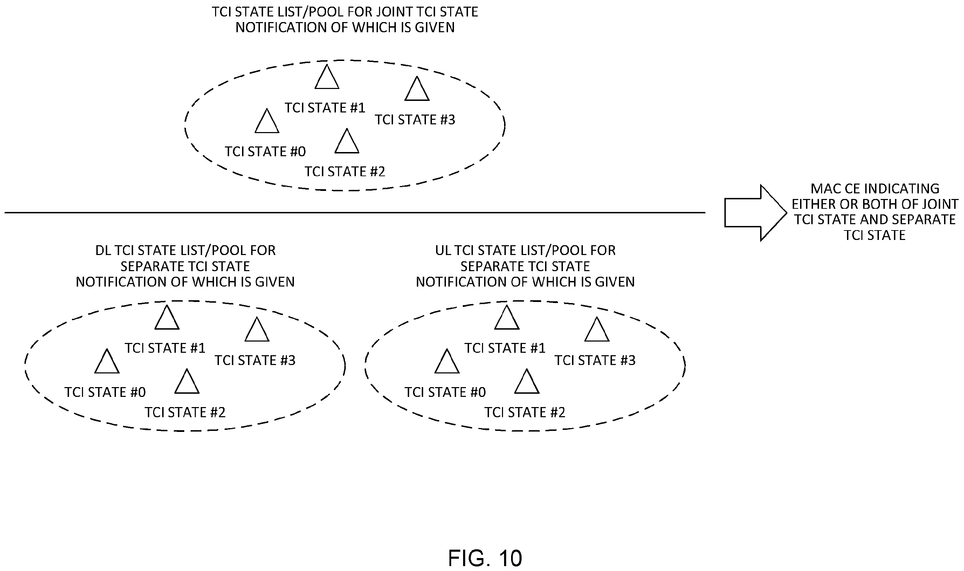

Fig. 10 is a diagram illustrating an example of TCI state indication according to Embodiment 3-2. A list/pool including one or more TCI states is configured for the UE using higher layer signaling (for example, RRC signaling) as described in the second embodiment. At least one of the joint TCI state and the separate TCI state is indicated to the UE by using the common MAC CE.

Embodiment 3-2 is roughly divided into Embodiment 3-2-1 and Embodiment 3-2-2.

### [Embodiment 3-2-1]

The joint TCI state or the separate TCI may be indicated to the UE by using the common MAC CE.

When the common MAC CE indicates the joint TCI state, the MAC CE may include only the field indicating the joint TCI state. In other words, when the common MAC CE indicates the joint TCI state, the field indicating the separate TCI state may not be included in the MAC CE.

In addition, when the common MAC CE indicates the separate TCI state, only the field indicating the separate TCI state may be included in the MAC CE. In other words, when the common MAC CE indicates the separate TCI state, the field indicating the joint TCI state may not be included in the MAC CE.

When the second MAC CE is the common MAC CE, the second MAC CE may indicate one or more (for example, two) TCI states and indicate either the joint TCI state or the separate TCI state for a codepoint of each TCI field included in the DCI. Notification of either the joint TCI state or the separate TCI state may be given by one value (bit, bit field) in each MAC CE.

The MAC CE defined in Rel. 15/16 may be used/diverted/extended as the common MAC CE. In addition, the common MAC CE may be a new MAC CE.

The common MAC CE may include a field for giving a notification indicating either the joint TCI state or the separate TCI state. When the field indicates a first value (for example, 0), the UE may determine that the MAC CE is a MAC CE indicating the joint TCI state. In addition, when the field indicates a second value (for example, 1), the UE may determine that the MAC CE is a MAC CE indicating the separate TCI state.

When the MAC CE indicates the joint TCI state, the MAC CE may include a field indicating one TCI state corresponding to each TCI codepoint.

When the MAC CE indicates the separate TCI state, the MAC CE may include a field indicating a plurality of (for example, two) TCI states corresponding to respective TCI codepoints.

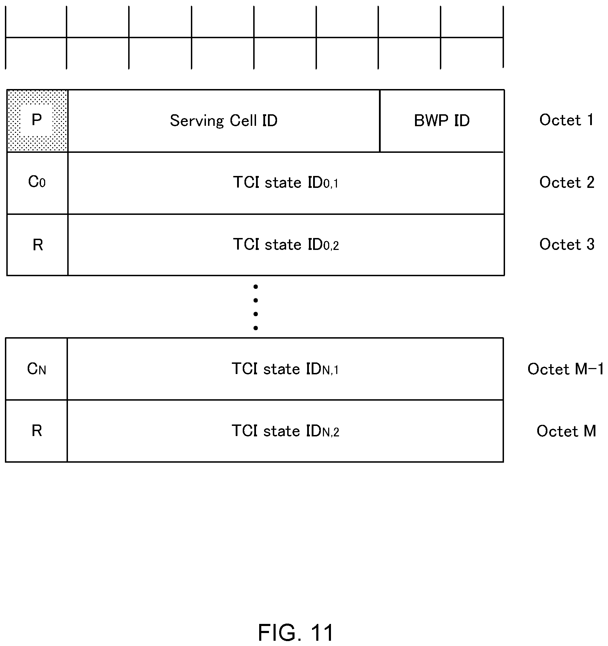

Fig. 11 is a diagram illustrating an example of a configuration of MAC CE according to Embodiment 3-2-1. The MAC CE illustrated in Fig. 11 includes a serving cell ID field, a BWP ID field, a field (TCI state ID_{i,j} (i is an integer from 0 to N, and j is 1 or 2)) indicating a TCI state, a field (Cᵢ) indicating whether or not a TCI state ID_{i,2} exists in a corresponding octet, a reserved bit field (R), and a field (P) indicating either the joint TCI state or the separate TCI state.

The UE determines whether the MAC CE indicates the joint TCI state or the separate TCI state on the basis of the value of P.

When the MAC CE indicates indicating the joint TCI state, the value of Cᵢ may be the first value (for example, 0) because it is sufficient if one TCI state can be indicated for each TCI codepoint. At this time, the MAC CE may not include the TCI state ID_{i,2} field or the reserved bit corresponding to the TCI state ID_{i,2} field.

When the MAC CE indicates the separate TCI state, one or two TCI states are indicated for each TCI codepoint. Therefore, the presence or absence of the TCI state ID_{i,2} field may be indicated to the UE by using Cᵢ.

### [Embodiment 3-2-2]

Either or both of the joint TCI state and the separate TCI may be indicated to the UE by using the common MAC CE.

When the second MAC CE is the common MAC CE, the second MAC CE may indicate one or more (for example, two) TCI states and indicate either the joint TCI state or the separate TCI state for a codepoint of each TCI field included in the DCI. Notification of either the joint TCI state or the separate TCI state may be given by one value (bit, bit field) in each DCI (TCI codepoint).

The MAC CE defined in Rel. 15/16 may be used/diverted/extended as the common MAC CE. In addition, the common MAC CE may be a new MAC CE.

The common MAC CE may include a field for giving a notification indicating either the joint TCI state or the separate TCI state.

The field may be a field (Cᵢ) indicating whether or not TCI state ID_{i,2} exists in the corresponding octet (Embodiment 3-2-2-1).

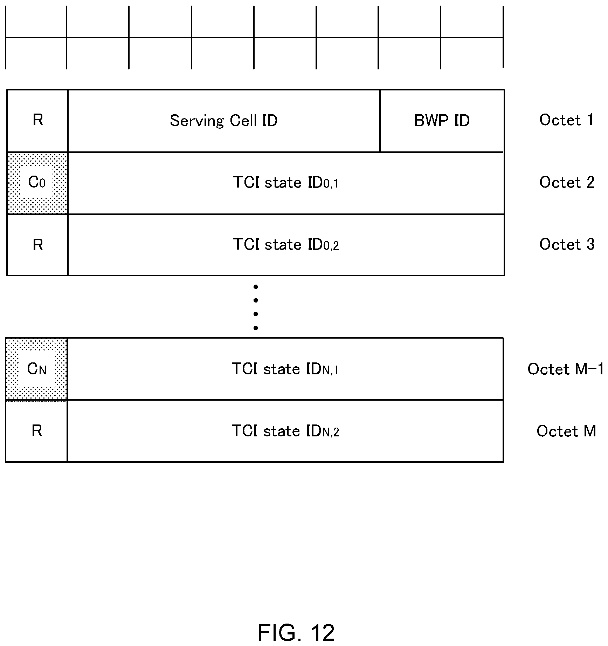

When the field indicates the first value (for example, 0), the TCI state ID_{i,2} does not exist in the corresponding octet (that is, Cᵢ is 0). At this time, the UE may determine that the MAC CE including the field indicates the joint TCI state. In addition, when the field indicates the second value (for example, 1), the TCI state ID_{i,2} exists in the corresponding octet (that is, Cᵢ is 1). At this time, the UE may determine that the MAC CE including the field indicates the separate TCI state (see Fig. 12).

In addition, the field may be newly defined in the MAC CE (Embodiment 3-2-2-2). The field may be defined at the position of the reserved bit included in the octet corresponding to the TCI state ID_{i,2}.

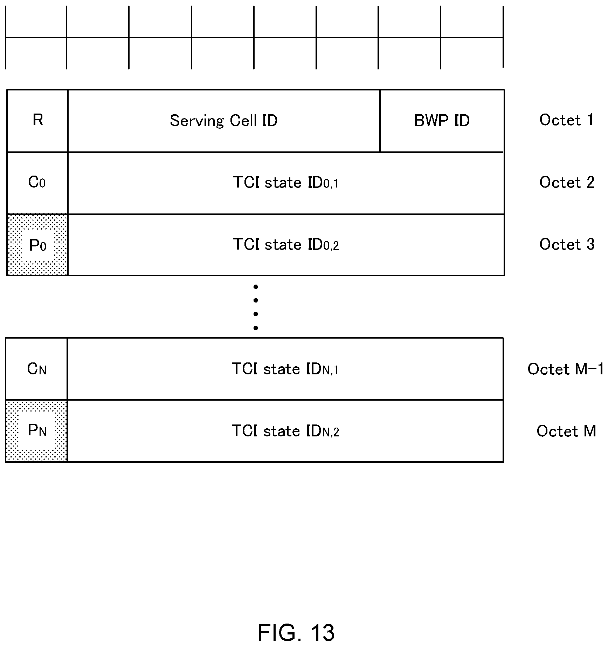

When the field (in Fig. 13, Pᵢ (i is an integer from 0 to N) is illustrated) indicates the first value (for example, 0), the UE may determine that the joint TCI state is indicated in the field indicating one TCI state corresponding to the field. In addition, when the field indicates the second value (for example, 1), the UE may determine that the separate TCI state is indicated in a field indicating a plurality of (for example, two) TCI states corresponding to the field (see Fig. 13).

Note that the position/size of each field of the MAC CE described in the present disclosure is merely an example, and it is not limited thereto. For example, the positions of Cᵢ and Pᵢ in Fig. 13 may be replaced with each other.

In addition, the field may be newly defined in the MAC CE (Embodiment 3-2-2-3). The field may be defined, for example, at a position above the field indicating the TCI state.

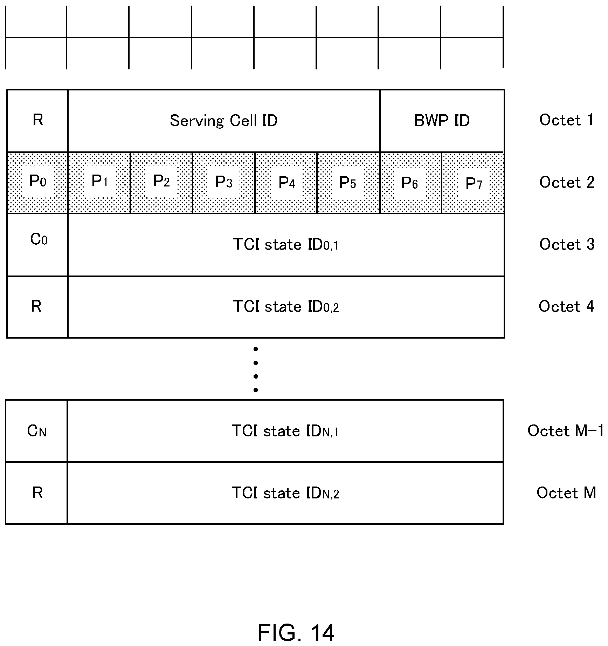

When the field (in Fig. 14, Pᵢ (i is an integer from 0 to 7) is illustrated) indicates the first value (for example, 0), the UE may determine that the joint TCI state is indicated in the field (TCI state IDi,i) indicating one TCI state corresponding to the field. In addition, when the field indicates the second value (for example, 1), the UE may determine that the separate TCI state is indicated in a field (TCI state IDi,i and TCI state ID_{i,2}) indicating a plurality of (for example, two) TCI states corresponding to the field (see Fig. 14) .

Note that the positions of Cᵢ and Pᵢ in Fig. 13 may be replaced with each other. In addition, Pᵢ in Fig. 14 is described from P₀ to P₇, but the number of i is not limited thereto. The number of i for Pᵢ may be defined in advance in the specifications or may be determined on the basis of Cᵢ.

### <<Modification of Third Embodiment>>

When a plurality of (for example, two) TCI states (TCI state IDs) is indicated on the TCI codepoint, the UE may determine whether a certain TCI state of the plurality of TCI states is the DL TCI state or the UL TCI state.

The correspondence (association) between each TCI state of the plurality of TCI states and the UL TCI state or the DL TCI state may be defined in advance in the specifications, or may be given in notification/configured to the UE by higher layer signaling. For example, the UE may determine that the TCI state corresponding to a first (relatively small (large)) TCI state ID is the UL TCI state and the TCI state corresponding to a second (relatively large (small)) TCI state ID is the DL TCI state.

In addition, one or more specific fields included in the MAC CE indicating activation/deactivation of the TCI state may indicate whether the TCI state corresponding to the TCI state ID of each TCI codepoint is the UL TCI state or the DL TCI state.

The specific field (which may be referred to as a first bit field) may be defined at a position of a reserved bit included in an existing MAC CE (the reserved bit may be used). The reserved bit may be, for example, a reserved bit included in the same octet as the serving cell ID field and the BWP ID field.

In addition, a new bit field that is the specific field (which may be referred to as a second bit field) may be added.

In addition, the presence or absence of the existence of the second bit field may be indicated to the UE on the basis of the value of the first bit field. For example, when the first bit field indicates the first value (for example, 0), it may be determined that the second bit field does not exist (the position of the second bit field becomes a reserved bit). In addition, for example, when the first bit field indicates the second value (for example, 1), it may be determined that the second bit field exists.

For example, when the first bit field is the first value, the joint TCI state may be indicated to the UE. In addition, for example, when the first bit field is the second value, the separate TCI state may be indicated to the UE. In other words, the UE may determine, on the basis of the value of the first bit field, that it is an indication of either the joint TCI state or the separate TCI state.

When a plurality of (for example, two) TCI states is indicated for each TCI codepoint, the UE may determine that each of the plurality of TCI states corresponds to the DL TCI state or the UL TCI state. As described above, the correspondence between each TCI state and the DL TCI state or the UL TCI state may be defined in advance in the specifications, or may be configured/given in notification to the UE by higher layer signaling.

When one TCI state is indicated for each TCI codepoint, the UE may determine, on the basis of the second bit field, that the one TCI state corresponds to either the DL TCI state or the UL TCI state.

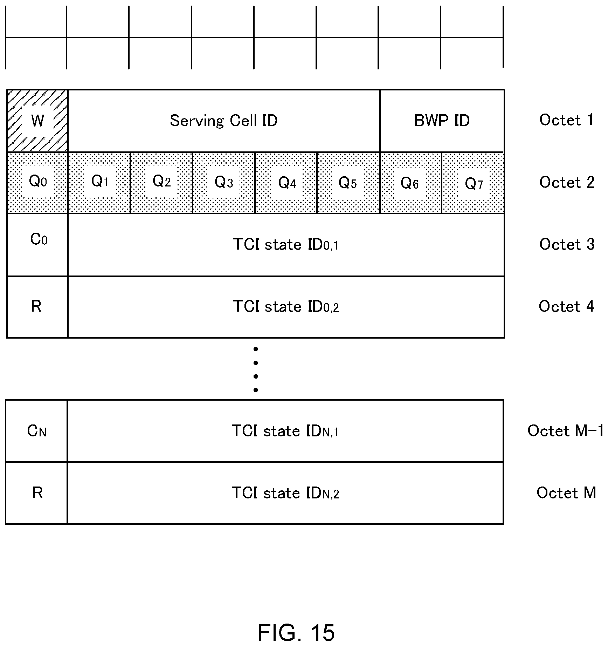

Fig. 15 is a diagram illustrating an example of a configuration of MAC CE according to a modification of the third embodiment. In the example illustrated in Fig. 15, the MAC CE includes a serving cell ID field, a BWP ID field, a field indicating a TCI state (TCI state IDi,j), a field (Cᵢ) indicating whether or not a TCI state IDi,2 exists in a corresponding octet, a reserved bit field (R), a first bit field (W), and a second bit field (Qᵢ (where i is an integer from 0 to 7)).

In the example illustrated in Fig. 15, the field indicating an i-th TCI state corresponds to an i-th second bit field. When one TCI state is indicated for each TCI codepoint to the UE, the UE determines, on the basis of the value of the i-th second bit field (Qi), whether the field indicating the i-th TCI state indicates the UL TCI state or the DL TCI state. For example, when the value of the i-th second bit field (Qᵢ) indicates the first value (for example, 0), the UE may determine that the TCI state indicated by the field indicating the corresponding TCI state is the UL TCI state. In addition, when the value of the i-th second bit field (Qᵢ) indicates the second value (for example, 1), the UE may determine that the TCI state indicated by the field indicating the corresponding TCI state is the DL TCI state. Note that, in the present disclosure, the first value and the second value may be replaced with each other.

In addition, whether the second bit field as illustrated in Fig. 15 exists may be determined on the basis of the value of the first bit field. The second bit field may be an optional field (octet) that exists only when the first bit field is a second value (for example, 1).

According to these, it is possible to indicate the UL TCI state at a certain TCI codepoint, indicate the DL TCI state at another TCI codepoint, and indicate the UL TCI state and the DC TCI state at yet another TCI codepoint.

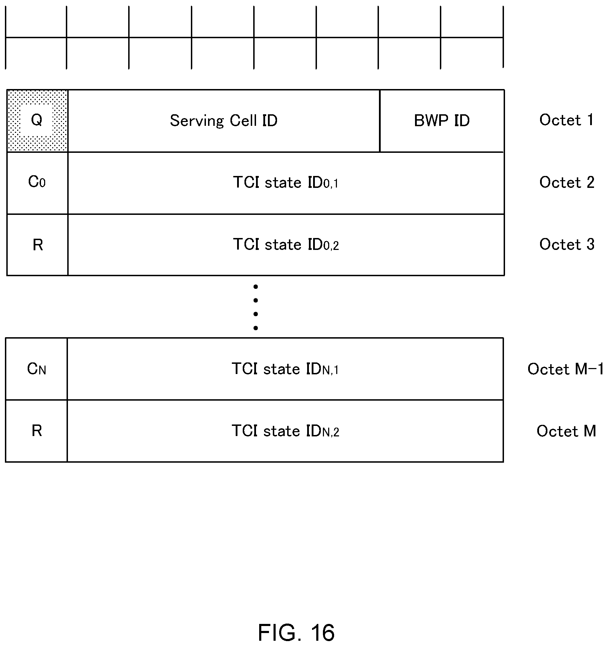

In addition, for one MAC CE, one second bit field (Q) may be included (see Fig. 16). At this time, the second bit field may be defined at a position of a reserved bit included in an existing MAC CE (the reserved bit may be used).

When the joint TCI state is indicated to the UE, the second bit field may not exist (may be a reserved bit). In addition, when the joint TCI state is indicated, the second bit field may indicate a specific value (for example, 0).

When the separate TCI state is indicated to the UE, the UE may determine, on the basis of the value of the second bit field, whether the TCI state indicated by the MAC CE including the field is the UL TCI state or the DL TCI state. For example, when the second bit field indicates the first value (for example, 0), it may be determined that the TCI state indicated by the MAC CE including the field is the UL TCI state. In addition, when the second bit field indicates the second value (for example, 1), it may be determined that the TCI state indicated by the MAC CE including the field is the DL TCI state.

According to this, it is possible to indicate one of a certain TCI codepoint, the UL TCI state or the DL TCI state, and indicate the UL TCI state and the DL TCI state at another TCI codepoint.

Note that the above-described specific field (for example, at least one of Pᵢ, Qi(Q), and W) may not be an independent field. For example, an indication regarding the specific field may be given to the UE by using a part of other fields. The other field may be, for example, at least one of the serving cell ID field, the BWP ID field, and the field for indicating the TCI state.

For example, in a case where 64 TCI state IDs are configured (TCI state ID = {0,..., 63}), 6 bits are required for indication/notification of the TCI state. On the other hand, in a case where the field for indicating the TCI state included in the MAC CE has 7 bits, one of the bits required for indication/notification of the TCI state is left. In such a case, the above specific field (for example, at least one of Pᵢ, Qi(Q), and W) may be indicated to the UE by using most significant bit (MBS) or least significant bit (LSB) of the other field (in this example, a field for indicating the TCI state).

According to this, it is possible to appropriately indicate the TCI state without defining a new field.

As described above, according to the third embodiment, the MAC CE that performs the activation/deactivation of the TCI state in the unified TCI state can be appropriately configured.

### <Fourth Embodiment>

A higher layer parameter (RRC IE)/UE capability corresponding to a function (feature) in at least one of the plurality of embodiments described above may be defined. The UE capability may indicate to support this function.

The UE in which the higher layer parameter corresponding to the function (enabling the function) is configured may perform the function. "The UE in which the higher layer parameter corresponding to the function is not configured does not perform the function (for example, according to Rel. 15/16)" may be defined.

The UE that has reported the UE capability indicating support for the function may perform the function. "The UE that does not report the UE capability indicating support for the function does not perform the function (for example, according to Rel. 15/16)" may be defined.

When the UE reports the UE capability indicating to support the function, and a higher layer parameter corresponding to the function is configured, the UE may perform the function. "When the UE does not report the UE capability indicating to support the function or the higher layer parameter corresponding to the function is not configured, the UE does not perform the function (for example, according to Rel. 15/16)" may be defined.

The UE capability may indicate whether the UE supports this function.

The function may be a unified TCI state framework.

The UE capability may be defined by whether or not to support at least one of the unified TCI state framework, the joint/separate TCI pool, and the joint/separate beam indication.

The UE capability may be defined by whether or not to support at least one of the joint TCI, the separate UL only TCI, and the separate DL only TCI.

The UE capability may be defined by whether or not to support the UE operation related to the description of each embodiment described above.

The UE capability may be defined by whether or not to support (dynamic) switching of the joint TCI and the separate TCI by the MAC CE. When the UE does not support this UE capability, the UE may switch the joint TCI and the separate TCI by the RRC.

The higher layer parameter corresponding to the function (enabling the function) may be a higher layer parameter related to the unified TCI state.

The higher layer parameter corresponding to the function (enabling the function) may be a higher layer parameter related to at least one of the joint TCI, the separate UL only TCI, and the separate DL only TCI.

As described above, according to the fourth embodiment, the UE can realize the above functions while maintaining compatibility with existing specifications.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

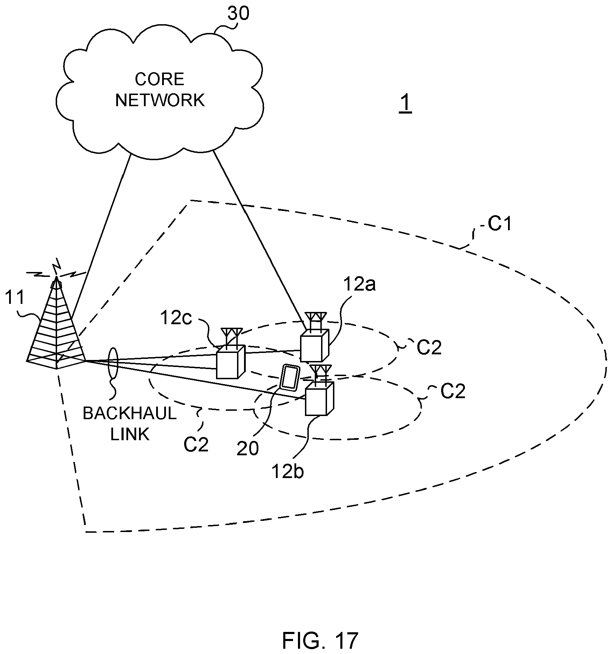

Fig. 17 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

In addition, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

In addition, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

In addition, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. In addition, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". In addition, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

In addition, in the radio communication system 1, a sounding reference signal (SRS), a demodulation reference signal (DMRS), or the like may be transmitted as an uplink reference signal (UL-RS). Note that, DMRSs may be referred to as user terminal-specific reference signals (UE-specific reference signals).

### (Base Station)

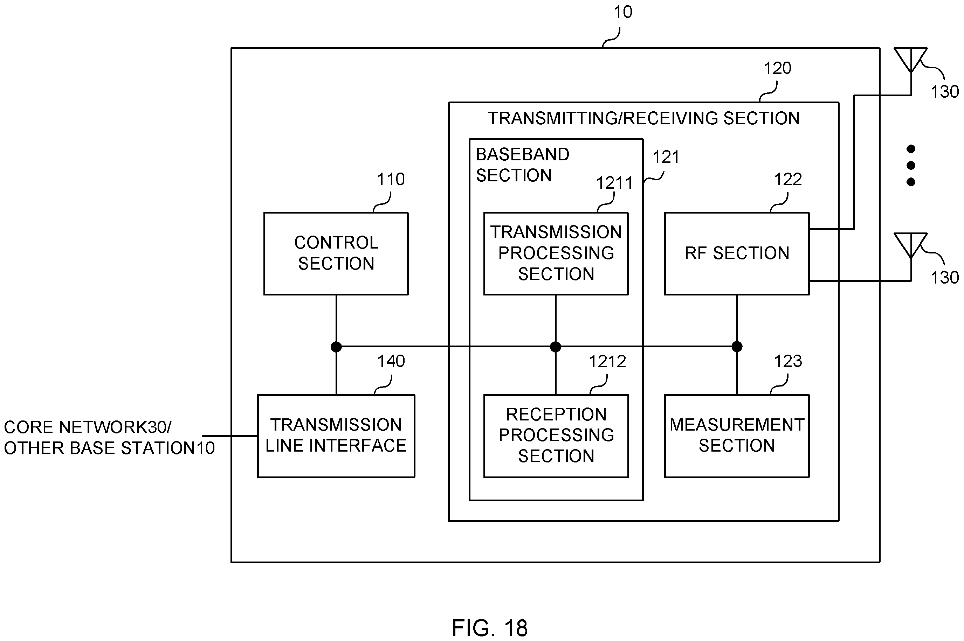

Fig. 18 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include antennas described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting code), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may transmit first radio resource control (RRC) information indicating a plurality of first transmission configuration indication (TCI) states (joint TCI states) applicable to both downlink and uplink, and second RRC information indicating a plurality of second TCI states (separate TCI states) applicable to one of downlink and uplink, and may transmit a medium access control (MAC) control element (CE) indicating activation of at least one of one or more first TCI states of the plurality of first TCI states and one or more second TCI states of the plurality of second TCI states. The control section 110 may control activation of the one or more first TCI states and the one or more second TCI states determined on the basis of at least one of the first RRC information and the second RRC information, and the MAC CE (first and second embodiments).

### (User Terminal)

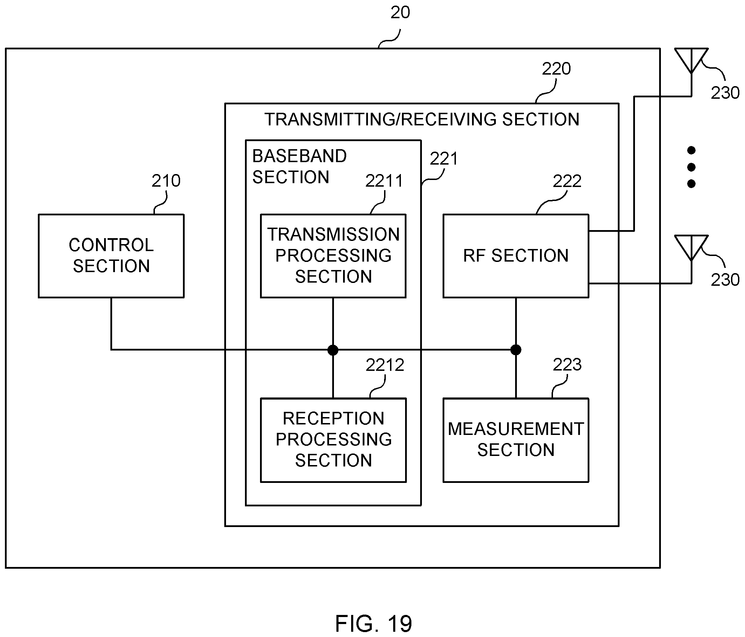

Fig. 19 is a diagram illustrating an example of a configuration of the user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correcting code), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220, the transmitting/receiving antenna 230, or the transmission line interface 240.

The transmitting/receiving section 220 may receive first radio resource control (RRC) information indicating a plurality of first transmission configuration indication (TCI) states (joint TCI states) applicable to both downlink and uplink, and second RRC information indicating a plurality of second TCI states (separate TCI states) applicable to one of downlink and uplink, and may receive a medium access control (MAC) control element (CE) indicating activation of at least one of one or more first TCI states of the plurality of first TCI states and one or more second TCI states of the plurality of second TCI states. The control section 210 may control activation of the one or more first TCI states and the one or more second TCI states on the basis of at least one of the first RRC information and the second RRC information, and the MAC CE (first and second embodiments).

The MAC CE may indicate activation of one of the one or more first TCI states and the one or more second TCI states (third embodiment).

The MAC CE indicating the activation of the one or more first TCI states may have the same format as the MAC CE indicating the activation of the one or more second TCI states (third embodiment).

The MAC CE may include a field as to whether to indicate the activation of the one or more first TCI states or the activation of the one or more second TCI states (third embodiment).

### (Hardware Configuration)

Note that the block diagrams that have been used to describe the above embodiments illustrate blocks in functional units. These functional blocks (components) may be implemented in arbitrary combinations of at least one of hardware or software. In addition, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

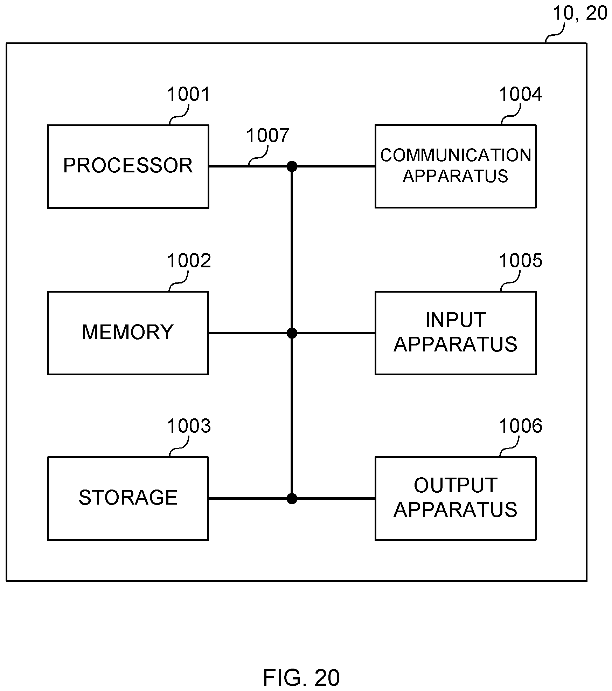

For example, the base station, the user terminal, and the like according to one embodiment of the present disclosure may function as a computer that executes the processing of the radio communication method of the present disclosure. Fig. 20 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, or a unit can be replaced with each other. The hardware configuration of the base station 10 and the user terminal 20 may be configured to include one or more of the apparatuses illustrated in the drawings, or may be configured not to include some apparatuses.

For example, although only one processor 1001 is illustrated, a plurality of processors may be provided. In addition, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by predetermined software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110(210), transmitting/receiving section 120(220), and the like may be implemented by the processor 1001.

In addition, the processor 1001 reads programs (program codes), software modules, data, and the like from at least one of the storage 1003 or the communication apparatus 1004 into the memory 1002, and performs various types of processing according to these. As the program, a program that causes a computer to execute at least a part of the operation described in the above-described embodiment is used. For example, the control section 110(210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as a secondary storage apparatus.

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120(220), the transmitting/receiving antenna 130(230), and the like described above may be implemented by the communication apparatus 1004. The transmitting/receiving section 120(220) may be implemented by being physically or logically separated into the transmitting section 120a(220a) and the receiving section 120b(220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

In addition, these apparatuses including the processor 1001, the memory 1002 and so on are connected by the bus 1007 so as to communicate information. The bus 1007 may be formed with a single bus, or may be formed with buses that vary between apparatuses.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with each other. In addition, the signal may be a message. The reference signal can be abbreviated as an RS, and may be referred to as a pilot, a pilot signal, and the like, depending on which standard applies. In addition, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. in addition, the mini slot may be referred to as a subslot. Each mini slot may include fewer symbols than the slot. A PDSCH (or PUSCH) transmitted in a time unit larger than the mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a slot, a mini slot and so on, instead of a subframe.

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, and the like or may be a processing unit of scheduling, link adaptation, and the like. Note that when the TTI is given, a time interval (e.g., the number of symbols) to which a transport block, a code block, a codeword, or the like is actually mapped may be shorter than the TTI.

Note that, when one slot or one mini slot is referred to as a "TTI," one or more TTIs (that is, one or multiple slots or one or more mini slots) may be the minimum time unit of scheduling. In addition, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, and the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

In addition, an RB may include one or more symbols in the time domain, and may be one slot, one mini slot, one subframe or one TTI in length. One TTI, one subframe, and the like may each be comprised of one or more resource blocks.

Note that one or more RBs may be referred to as a physical resource block (PRB), a subcarrier group (SCG), a resource element group (REG), a PRB pair, an RB pair, and the like.

In addition, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a predetermined signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, and the like described in the present disclosure may be represented using absolute values, or may be represented using relative values with respect to predetermined values, or may be represented using other corresponding information. For example, a radio resource may be indicated by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

In addition, information, signals, and the like can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. In addition, the RRC signaling may be referred to as an RRC message, and may be, for example, an RRC connection setup message, an RRC connection reconfiguration message, and the like. In addition, notification of the MAC signaling may be performed using, for example, an MAC control element (CE).

In addition, notification of predetermined information (for example, notification of "being X") is not limited to explicit notification, and may be performed implicitly (for example, by not giving a notification of the predetermined information or by giving a notification of another information,).

Judging may be performed by a one-bit value (0 or 1), by a Boolean indicated by true or false, or by comparison of numerical values (for example, comparison with a given value).

Software, whether referred to as software, firmware, middleware, microcode or hardware description language, or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

In addition, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a wireless communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be replaced with words corresponding to terminal-to-terminal communication (for example, "sidelink"). For example, an uplink channel, a downlink channel, and the like may be replaced with a sidelink channel.

Similarly, the user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. in addition, the order of processing procedures, sequences, flowcharts, and the like of the aspects/embodiments described in the present disclosure may be reordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

In addition, "determining" may be regarded as "determining" receiving (e.g., receiving information), transmitting (e.g., transmitting information), inputting, outputting, accessing (e.g., accessing data in memory), and the like.

In addition, "determining may be regarded as "determining" resolving, selecting, choosing, establishing, comparing, and the like. In other words, "determining" may be regarded as "determining" some action.

In addition, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as a, an, and the in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2021-084896 filed on May 19, 2021. The contents of this are all incorporated herein.

## Claims

1. A terminal comprising:
a receiving section that receives first radio resource control (RRC) information indicating a plurality of first transmission configuration indication (TCI) states applicable to both downlink and uplink, and second RRC information indicating a plurality of second TCI states applicable to one of downlink and uplink, and receives a medium access control (MAC) control element (CE) indicating activation of at least one of one or more first TCI states of the plurality of first TCI states and one or more second TCI states of the plurality of second TCI states; and
a control section that controls activation of the one or more first TCI states and the one or more second TCI states on a basis of at least one of the first RRC information and the second RRC information, and the MAC CE.

2. The terminal according to claim 1, wherein the MAC CE indicates activation of one of the one or more first TCI states and the one or more second TCI states.

3. The terminal according to claim 1, wherein a MAC CE indicating activation of the one or more first TCI states has a same format as a MAC CE indicating activation of the one or more second TCI states.

4. The terminal according to claim 1, wherein the MAC CE includes a field as to whether to indicate activation of the one or more first TCI states or activation of the one or more second TCI states.

5. A radio communication method of a terminal, the method comprising:
a step of receiving first radio resource control (RRC) information indicating a plurality of first transmission configuration indication (TCI) states applicable to both downlink and uplink, and second RRC information indicating a plurality of second TCI states applicable to one of downlink and uplink, and receiving a medium access control (MAC) control element (CE) indicating activation of at least one of one or more first TCI states of the plurality of first TCI states and one or more second TCI states of the plurality of second TCI states; and
a step of controlling activation of the one or more first TCI states and the one or more second TCI states on a basis of at least one of the first RRC information and the second RRC information, and the MAC CE.

6. A base station comprising:
a transmitting section that transmits first radio resource control (RRC) information indicating a plurality of first transmission configuration indication (TCI) states applicable to both downlink and uplink, and second RRC information indicating a plurality of second TCI states applicable to one of downlink and uplink, and transmits a medium access control (MAC) control element (CE) indicating activation of at least one of one or more first TCI states of the plurality of first TCI states and one or more second TCI states of the plurality of second TCI states; and
a control section that controls activation of the one or more first TCI states and the one or more second TCI states determined on a basis of at least one of the first RRC information and the second RRC information, and the MAC CE.
